# EUROPÄISCHE PATENTSCHRIFT

(11) **EP 0 884 367 B1**
(45) Veröffentlichungstag und Bekanntmachung des Hinweises auf die Patenterteilung: **13.08.2003**
(21) Anmeldenummer: 98109914.6
(22) Anmeldetag: 29.05.1998
(51) Int. Cl.: C09B 44/10, C09B 29/048, C09B 69/06, C09D 11/02, G11B 7/24, B41M 5/38

(54) **Mit Licht beschreibbare Informationsspeicher, enthaltend kationische Diphenylaminfarbstoffe**
Light-writable data storage media containing cationic diphenylamine dyes
Support d'enregistrement d'informations inscriptible optiquement, contenant des colorants cationiques de type diphénylamine

(30) Priorität: 11.06.1997 DE 19724583
(43) Veröffentlichungstag der Anmeldung: 16.12.1998
(73) Patentinhaber: BAYER AG, 51368 Leverkusen (DE)
(72) Erfinder: Berneth, Horst, Dr., 51373 Leverkusen (DE)

(56) Entgegenhaltungen:
- EP-A- 0 495 250
- EP-A- 0 557 820
- EP-A- 0 579 011
- EP-A- 0 717 082
- GB-A- 2 017 134

## Beschreibung

Die vorliegende Erfindung betrifft mit Licht beschreibbare Informationsspeicher enthaltend kationische Diphenylaminfarbstoffe.

Aus EP-A-0 579 011 und EP-A-495 250 sind kationische Thiadiazoldiphenylaminfarbstoffe sowie ihre Anhydrobasen bekannt. Die Farbstoffe werden im wesentlichen zum Färben verschiedener textiler und nichttextiler Materialien verwendet.

EP-A-0 557 820 offenbart Azinnentromethin-Farbstoffe, die aus kationischen Thiadiazolazo-verbindungen hergestellt werden, sowie deren verwendung in Aufreichnungsmaterialien.

Es wurden nun mit Licht beschreibbare Informationsspeicher gefunden, enthaltend kationische Thiadiazoldiphenylaminfarbstoffe der Formel (I) 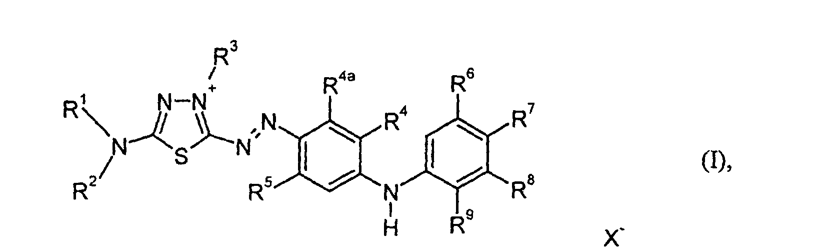 worin
- R¹ und R²: unabhängig voneinander für Wasserstoff, Alkyl, Alkenyl, Cycloalkyl, Aralkyl oder einen gegebenenfalls über eine Methylen- oder Ethylenbrücke gebundenen Heterocyclus stehen,
oder
- R¹ und R²: gemeinsam mit dem Stickstoffatom, an welches sie gebunden sind, für einen heterocyclischen Ring stehen,
- R³: für Alkyl, Alkenyl, Cycloalkyl oder Aralkyl steht,
- R⁴ und R⁹: unabhängig voneinander für Wasserstoff, Alkyl, Alkoxy oder Halogen stehen,
- R^{4a}: für Wasserstoff steht
oder
- R⁴ und R^{4a}: gemeinsam für eine -CH=CH-CH=CH-Brücke stehen,
- R⁵: für Wasserstoff, Alkyl, Alkoxy, Aryloxy, Arylamino, Halogen, Cyano, Alkoxycarbonyl oder Nitro steht,
- R⁶ und R⁸: unabhängig voneinander für Alkyl, Alkoxy oder Halogen stehen und R⁸ zusätzlich für Wasserstoff stehen kann,
- R⁷: für Alkoxy, Aryloxy oder NR¹⁰R¹¹ steht,
oder
- R⁶ und R⁷: gemeinsam eine -OCH₂O-, -CH₂CH₂O-, 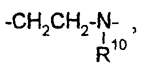 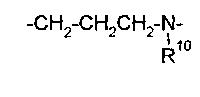 oder 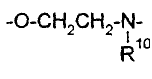 Brücke bilden,
- R¹⁰ und R¹¹: unabhängig voneinander für Alkyl, Alkenyl, Cycloalkyl, Aralkyl, Aryl oder den Rest eines Heterocyclus stehen und R¹⁰ zusätzlich für Wasserstoff steht
oder
- R¹⁰ und R¹¹: gemeinsam mit dem Stickstoffatom, an welches sie gebunden sind, für einen heterocyclischen Ring stehen,
und wobei,
im Falle daß R⁷ für NR¹⁰R¹¹ steht, R⁶ und R⁸ unabhängig voneinander die oben angegebene Bedeutung haben sowie zusätzlich für Wasserstoff stehen und R⁵ die oben angegebene Bedeutung hat, sowie zusätzlich für NHCOR¹² oder NHSO₂R¹³ steht,
- R¹² und R¹³: unabhängig voneinander für Alkyl, Alkenyl, Cycloalkyl, Aryl, den Rest eines Heterocyclus, Alkoxy oder NR¹⁰R¹¹ stehen und R¹² zusätzlich für Wasserstoff steht und
- X⁻: für ein Anion steht.

Alle oben genannten Alkyl-, Alkenyl-, Cycloalkyl-, Aralkyl-, Aryl-, Alkoxy- und heterocyclischen Reste sind gegebenenfalls mit nichtionogenen Substituenten substituiert.

Nichtionogene Substituenten sind beispielsweise die in der Farbstoffchemie üblichen, nicht dissoziierenden Substituenten, wie Cyano, Hydroxy, Fluor, Chlor, Brom, Nitro, Alkyl, Monoalkylamino, Dialkylamino, Alkoxy, Phenyl, Acyloxy, Acylamino, Alkoxycarbonyl und Alkoxycarbonyloxy.

Alkylreste, auch solche in Alkoxy- und Aralkylresten, sind beispielsweise solche mit 1 bis 8, vorzugsweise 1 bis 4 C-Atomen. Sie können auch verzweigt sein.

Alkenylreste sind beispielsweise solche mit 2 bis 6, vorzugsweise 2 bis 3 C-Atomen.

Cycloalkylreste sind beispielsweise solche mit 4 bis 7, vorzugsweise 5 bis 6 C-Atomen. Halogen steht vorzugsweise für Fluor, Chlor oder Brom.

Arylreste, auch solche in Aralkylresten, sind vorzugsweise Phenylreste, die gegebenenfalls durch 1 bis 3 der oben beschriebenen nichtionogenen Substituenten und/oder eine Carboxylgruppe substituiert sein können.

Heterocyclische Reste sind beispielsweise Thienyl, Furyl und Pyridyl, sowie ihre teilweise oder vollständig hydrierten Derivate. Sie können gegebenenfalls 1 bis 3 der oben beschriebenen nichtionogenen Substituenten enthalten.

Als Anionen sind farblose, organische und anorganische Anionen bevorzugt, beispielsweise Chlorid, Bromid, Tetrafluoroborat, Tetraphenylborat, Triphenylcyanoborat, Hydrogensulfat, Sulfat, Dihydrogenphosphat, Hydrogenphosphat, Methylsulfat, Ethylsulfat, Tri- und Tetrachlorozinkat, Tetrachloroferrat und Anionen gesättigter und ungesättigter aliphatischer, cycloaliphatischer, aromatischer oder heterocyclischer Carbon- und Sulfonsäuren mit 1 bis 22 C-Atomen wie Formiat, Acetat, Trifluoracetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nicotinsäure, Methansulfonat, Trifluormethansulfonat, Ethansulfonat, Butansulfonat, Nonafluorbutansulfonat, Hexansulfonat, Octansulfonat, Tetradecansulfonat, Pentadecansulfonat, Benzolsulfonat, Chlorbenzolsulfonat, Toluolsulfonat, Butylbenzolsulfonat, tert.-Butylbenzolsulfonat oder Dodecylbenzolsulfonat.

Wenn es sich um mehrwertige Anionen handelt, z.B. um Sulfat oder Oxalat, dann steht in Formel (I) X⁻ für ein Äquivalent solche eines mehrwertigen Anions.

Bevorzugt sind kationische Thiadiazoldiphenylaminfarbstoffe, dadurch gekennzeichnet, daß in Formel (I)
- R¹ und R²: unabhängig voneinander für jeweils gegebenenfalls durch Hydroxy, Halogen, Cyano, C₁-C₄-Alkoxy, Aminocarbonyl und/oder C₁-C₄-Alkoxycarbonyl substituiertes C₁-C₈-Alkyl, Allyl, Cyclopentyl, Cyclohexyl, für einen jeweils gegebenenfalls durch Halogen, Cyano, C₁-C₄-Alkyl und/oder C₁-C₄-Alkoxy substituierten Benzyl- oder Phenethylrest, Tetramethylensulfonylrest, Tetrahydrofurylmethyl-, Pyridylmethyl- oder Pyridylethylrest stehen,
oder
- R²: für Wasserstoff steht,
oder
- R¹ und R²: gemeinsam mit dem Stickstoffatom, an welches sie gebunden sind, für einen jeweils gegebenenfalls durch bis zu 4 Methylgruppen substituierten Pyrrolidino-, Piperidino- oder Morpholinorest oder für einen gegebenenfalls am Stickstoff durch Methyl, Ethyl, Hydroxyethyl oder Aminoethyl substituierten Piperazinorest stehen,
- R³: für gegebenenfalls durch Hydroxy, Halogen, Cyano, C₁-C₄-Alkoxy, Aminocarbonyl und/oder C₁-C₄-Alkoxycarbonyl substituiertes C₁-C₂₀-Alkyl, für Allyl oder für einen jeweils gegebenenfalls durch Halogen, C₁-C₄-Alkyl und/oder C₁-C₄-Alkoxy substituierten Benzyl- oder Phenethylrest stehen,
- R⁴ und R⁹: unabhängig voneinander für Wasserstoff, C₁-C₄-Alkyl, C₁-C₄-Alkoxy oder Halogen stehen,
- R^{4a}: für Wasserstoff steht
oder
- R⁴ und R^{4a}: gemeinsam für eine -CH=CH-CH=CH-Brücke stehen,
- R⁵: für Wasserstoff, C₁-C₄-Alkyl, C₁-C₄-Alkoxy, C₆-C₁₀-Aryloxy, C₆-C₁₀-Arylamino, Halogen, Cyano, C₁-C₄-Alkoxycarbonyl oder Nitro steht,
- R⁶ und R⁸: unabhängig voneinander für C₁-C₄-Alkyl, C₁-C₄-Alkoxy oder Halogen stehen, und R⁸ zusätzlich für Wasserstoff stehen kann,
- R⁷: für C₁-C₈-Alkoxy, gegebenenfalls durch Halogen, Cyano, C₁-C₄-Alkyl und/oder C₁-C₄-Alkoxy substituiertes C₆-C₁₀-Aryloxy oder für NR¹⁰R¹¹ steht,
oder
- R⁶ und R⁷: gemeinsam eine -OCH₂O-, 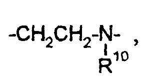 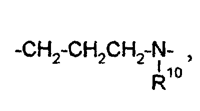 oder 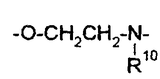 Brücke bilden,
- R¹⁰ und R¹¹: unabhängig voneinander für gegebenenfalls durch Hydroxy, Halogen, Cyano oder C₁-C₄-Alkoxy substituiertes C₁-C₈-Alkyl, für Allyl, Cyclopentyl oder Cyclohexyl oder für jeweils gegebenenfalls durch Hydroxy, Halogen, Cyano, C₁-C₈-Alkyl, C₁-C₈-Alkoxy oder NR¹⁰R¹¹ substituiertes C₆-C₁₀-Aryl oder Pyridyl steht
oder
- R¹⁰: für Wasserstoff steht,
- R¹⁰ und R¹¹: gemeinsam mit dem Stickstoffatom, an welches sie gebunden sind, für einen jeweils gegebenenfalls durch 1 bis 4 Methylgruppen substituierten Pyrrolidino-, Piperidino- oder Morpholinorest oder für einen gegebenenfalls am Stickstoff durch Methyl, Ethyl, Hydroxyethyl oder Aminoethyl substituierten Piperazinorest stehen,
und wobei
im Falle, daß R⁷ für NR¹⁰R¹¹ steht, R⁶ und R⁸ unabhängig voneinander die oben angegebene Bedeutung haben oder für Wasserstoff stehen und R⁵ die oben angegebene Bedeutung hat oder für NHCOR¹² oder NHSO₂R¹³ steht,
- R¹² und R¹³: unabhängig voneinander für jeweils gegebenenfalls durch Hydroxy, Halogen, Cyano oder C₁-C₄-Alkoxy substituiertes C₁-C₁₂-Alkyl oder C₁-C₈-Alkoxy oder für jeweils gegebenenfalls durch Hydroxy, Halogen, Cyano, C₁-C₄-Alkyl oder C₁-C₄-Alkoxy substituiertes C₆-C₁₀-Aryl, Benzyl oder Pyridyl stehen oder für Allyl, Cyclopentyl, Cyclohexyl oder NR¹⁰R¹¹ stehen
oder
- R¹²: für Wasserstoff steht und
- X⁻: für ein Anion steht.

Besonders bevorzugt sind kationische Thiadiazoldiphenylaminfarbstoffe, dadurch gekennzeichnet, daß in Formel (I)
- R¹ und R²: unabhängig voneinander für Methyl, Ethyl, Propyl, Isopropyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylmethyl, Aminocarbonylethyl, Methoxycarbonylmethyl, Methoxycarbonylethyl, Allyl, Cyclohexyl, Benzyl, Phenethyl, Methylbenzyl, Chlorbenzyl, Methoxybenzyl, Tetramethylensulfon-3-yl, Furfuryl, 2-oder 4-Pyridylmethyl oder 2- oder 4-Pyridylethyl stehen
oder
- R²: für Wasserstoff steht
oder
- R¹ und R²: gemeinsam mit dem Stickstoffatom, an welches sie gebunden sind, für Pyrrolidino, Piperidino, Morpholino oder gegebenenfalls am Stickstoff durch Methyl, Ethyl, Hydroxyethyl oder Aminoethyl substituiertes Piperazino stehen,
- R³: für Methyl, Ethyl, Propyl, Butyl, Hexyl, Octyl, Dodecyl, Hydroxyethyl, Hydroxypropyl, Chlorethyl, Cyanoethyl, Methoxyethyl, Ethoxyethyl, Methoxypropyl, Methoxycarbonylethyl, Allyl oder Benzyl steht,
- R⁴: für Methyl, Ethyl, Methoxy, Ethoxy oder Chlor steht,
- R^{4a}: für Wasserstoff steht
oder
- R⁴ und R^{4a}: gemeinsam für eine -CH=CH-CH=CH-Brücke stehen,
- R⁵: für Wasserstoff, Methyl, Methoxy, Chlor oder Cyano steht,
- R⁶, R⁸ und R⁹: unabhängig voneinander für Methyl, Ethyl, Methoxy oder Ethoxy stehen
oder
- R⁸ und R⁹: unabhängig voneinander für Wasserstoff stehen,
- R⁷: für Methoxy, Ethoxy, Propoxy, Butoxy, Phenoxy oder NR¹⁰R¹¹ steht,
oder
- R⁶ und R⁷: gemeinsam eine -O-CH₂-O-Brücke bilden,
- R¹⁰ und R¹¹: unabhängig voneinander für Methyl, Ethyl, Propyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Allyl, Cyclohexyl, Benzyl, Phenyl, Tolyl, Methoxyphenyl, Ethoxyphenyl, Phenoxyphenyl, Chlorphenyl, Dimethoxyphenyl, Trimethoxyphenyl, Dimethylaminophenyl, Diethylaminophenyl, Dibutylaminophenyl, Pyrrolidinophenyl, Piperidinophenyl, Anilinophenyl, N-Methylanilinophenyl oder N,N-Diphenylaminophenyl stehen
oder
- R¹⁰: für Wasserstoff steht
oder
- R¹⁰ und R¹¹: gemeinsam mit dem Stickstoffatom, an welches sie gebunden sind, für Pyrrolidino, Piperidino, Morpholino oder für gegebenenfalls am Stick-Stoff durch Methyl, Ethyl, Hydroxyethyl oder Aminoethyl substituiertes Piperazino stehen
und wobei
im Falle, daß R⁷ für NR¹⁰R¹¹ steht, R⁶ und R⁸ die oben angegebene Bedeutung haben oder unabhängig voneinander für Wasserstoff stehen und R⁵ die oben angegebene Bedeutung hat oder für Acetylamino, Propionylamino, Trifluoracetylamino, Methoxycarbonylamino, Methylsulfonylamino oder Perfluorbutylsulfonylamino steht,
- X⁻: für ein Anion steht.

Ganz besonders bevorzugt sind kationische Thiadiazoldiphenylaminfarbstoffe, dadurch gekennzeichnet, daß in Formel (I)
- R¹ und R²: unabhängig voneinander für Methyl, Ethyl, Propyl, Isopropyl, Butyl, Hydroxyethyl, Hydroxypropyl, Cyanoethyl oder Methoxyethyl stehen oder R¹ und R² gemeinsam mit dem dazwischenliegenden Stickstoffatom für Pyrrolidino, Piperidino oder Morpholino stehen,
- R³: für Methyl, Ethyl, Propyl, Butyl, Hexyl oder Benzyl steht,
- R⁴: für Methoxy steht,
- R^{4a}: für Wasserstoff steht,
- R⁵: für Wasserstoff, Methyl oder Methoxy steht,
- R⁶: für Methyl oder Methoxy steht,
- R⁷: für Methoxy, Ethoxy, Phenoxy, Methylamino, Ethylamino, Dimethylamino, Diethylamino, Dibutylamino, Anilino, 2-, 3- oder 4-Methylanilino, 2-, 3- oder 4-Methoxyanilino, 2,4- oder 3,4-Dimethoxyanilino, 4-Dimethylaminoanilino, N-Methylanilino oder 4-Anilinoanilino steht,
oder
- R⁶ und R⁷: gemeinsam eine -OCH₂O-Brücke bilden,
- R⁸ und R⁹: für Wasserstoff stehen und
- X⁻: für ein Anion steht.

Ebenfalls ganz besonders bevorzugt sind kationische Thiadiazoldiphenylaminfarbstoffe, dadurch gekennzeichnet, daß in Formel (I)
- R¹ und R²: unabhängig voneinander für Methyl, Ethyl, Propyl, Isopropyl, Butyl, Hydroxyethyl, Hydroxypropyl, Cyanoethyl oder Methoxyethyl stehen
oder
- R¹ und R²: gemeinsam mit dem Stickstoffatom, an welches sie gebunden sind, für Pyrrolidino, Piperidino oder Morpholino stehen,
- R³: für Methyl, Ethyl, Propyl, Butyl, Hexyl oder Benzyl steht,
- R⁴: für Methoxy steht,
- R^{4a}: für Wasserstoff steht,
- R⁵: für Wasserstoff, Methyl, Methoxy oder Acetylamino steht,
- R⁶: für Wasserstoff, Methyl oder Methoxy steht,
- R⁷: für Methylamino, Ethylamino, Dimethylamino, Diethylamino, Dibutylamino, Anilino, 2-, 3- oder 4-Methylanilino, 2-, 3- oder 4-Methoxyanilino, 2,4- oder 3,4-Dimethoxyanilino, 4-Dimethylaminoanilino, N-Methylanilino oder 4-Anilinoanilino steht,
oder
- R⁶ und R⁷: gemeinsam eine -O-CH₂O-Brücke bilden,
- R⁸ und R⁹: für Wasserstoff stehen und
- X⁻: für ein Anion steht.

Die Farbstoffe der Formel (I) können nach an sich bekannten Verfahren hergestellt werden, wie sie beispielsweise in EP-A-0 579 011 beschrieben sind.

Eines der Verfahren ist dadurch gekennzeichnet, daß man 2-Amino-1,3,4-thiadiazole der Formel (III) 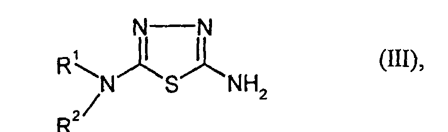 in der
R¹ und R² die bei Formel (I) angegebene allgemeine, bevorzugte und besonders bevorzugte Bedeutung haben,
diazotiert,
auf Diphenylaminderivate der Formel (IV) 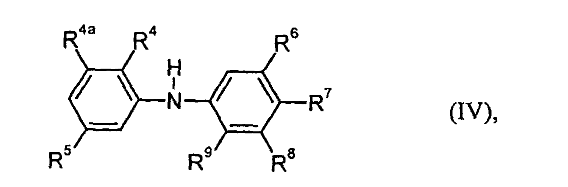 in der
R⁴ bis R⁹ die bei Formel (I) angegebene allgemeine, bevorzugte und besonders bevorzugte Bedeutung haben,
kuppelt und dann mit Verbindungen der Formel (V)

R³X (V)

in der
R³ und X die bei Formel (I) angegebene allgemeine, bevorzugte und besonders bevorzugte Bedeutung haben, oder Vorstufen davon,
quaterniert.

Die 2-Amino-1,3,4-thiadiazole der Formel (III) sind z.B. aus der DE-A-2 811 258 bekannt oder analog dazu erhältlich. Die Diphenylaminderivate der Formel (IV) sind z.B. aus Houben-Weyl, Methoden der Organischen Chemie, Band XI/1 bekannt oder analog erhältlich.

Die erfindungsgemäßen Informationsspeicher sind optische Aufzeichnungsmaterialien, die eine lichtabsorbierende Schicht tragen. Belichten dieser Schicht, beispielsweise mit einem Laser geeigneter Wellenlänge, führt zu einer Erwärmung der belichteten Stelle und als Folge zu ihrer Veränderung. Beispielsweise kann die Erwärmung zum Schmelzen führen, wodurch die Oberfläche der Schicht sich verändert, beispielsweise unter Bildung kleiner Krater. Es kann dabei auch ein Teil des Materials verdampft werden, ebenfalls unter Bildung von Kratern. Es kann auch der Farbstoff der lichtabsorbierenden Schicht zerstört werden, entweder thermisch und/oder photochemisch. Es kann sich beispielsweise auch der Brechungsindex der Schicht verändern. In jedem Fall enthält die so veränderte Schicht die Information gespeichert. Sie kann mittels einer schwächeren Lichtquelle wieder ausgelesen werden.

Die Herstellung solcher lichtabsorbierender Schichten und die Verwendung in Informationsspeichern ist beispielsweise in WO 84/02795 und EP-A 0 023 736 beschrieben.

Solche Informationsspeicher tragen auf einem Substrat, vorwiegend einer Kunststoffplatte mit hervorragenden optischen Eigenschaften (hohe Transparenz, keine Doppelbrechung), z.B. aus Polycarbonat, eine lichtabsorbierende Beschichtung. Diese Beschichtung enthält neben dem Farbstoff häufig auch ein Bindemittel. Die Kunststoffplatte kann beispielsweise auch verspiegelt sein, z.B. mit Aluminium. Vorteilhaft wird die Beschichtung aus Lösung, z.B. durch spin coating, aufgebracht. Diese Beschichtung muß sehr dünn, sehr gleichmäßig und von hoher optischer Qualität sein. Zusätzlich muß sie im Bereich der Lichtquelle stark absorbieren. Als Lichtquellen werden Laser, beispielsweise Laserdioden, verwendet, die im Bereich 600 bis 700 nm arbeiten.

Wegen ihrer ausgeprägten Absorption in diesem Wellenlängenbereich sind die erfindungsgemäßen Farbstoffe der Formel (I) für die Verwendung in solchen Informationsspeichern besonders gut geeignet. Ebenfalls geeignet sind Mischungen dieser Farbstoffe. Sie sind in den zur Beschichtung gebräuchlichen Lösungsmitteln gut löslich. Diese Lösungsmittel dürfen die Kunststoffplatte nicht angreifen. Solche Lösungsmittel sind beispielsweise Ketone und Alkohole wie Butanon, Cyclohexanon, Methanol, Ethanol, Butanol oder Diacetonalkohol oder Mischungen davon.

Geeignete Bindemittel sind alle filmbildenden, vorzugsweise polymeren Materialien, z.B. Polystyrol, Poly-α-methylstyrol, Polymethylacrylat, Polymethylmethacrylat, Polyvinylchlorid, Polyvinylacetat, Polyvinylacetat/-vinylpyrrolidon, Polycarbonat, Cellulosenitrat, Celluloseacetatbutyrat oder Mischungen oder Copolymere hiervon.

### Beispiele

### Beispiel 1 (Farbstoff der Formel (I))

10,7 g des Farbstoffs der Formel 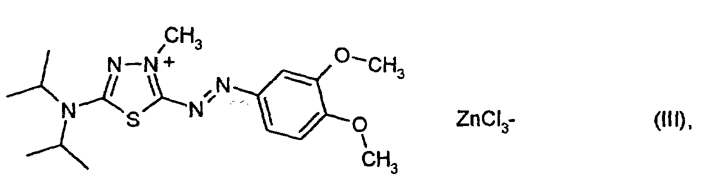 der in EP-A-0 717 082 beschrieben ist, 20,0 g 4-Amino-4'-methoxydiphenylamin-Hydrochlorid und 6,6 g Natriumacetat wurden in 110 ml Methanol 6 h bei 50°C gerührt. Es wurde mit 1,1 1 Essigsäureethylester verdünnt, abgesaugt, mit Essigsäureethylester gewaschen und im Vakuum getrocknet. Dann wurde in 500 ml Wasser verrührt, abgesaugt, mit Wasser gewaschen und erneut im Vakuum getrocknet. Man erhielt 12,2 g (85 % der Theorie) des Farbstoffs der Formel (I) mit R¹ = R² = Isopropyl, R³ = Methyl, R⁴ = Methoxy, R⁵ = R⁶ = R⁸ = R⁹ = Wasserstoff, R⁷ = 4-Methoxyanilino und X⁻ = ZnCl₃⁻.

Eine Lösung in Methanol/Eisessig 9:1 zeigte ein Absorptionsmaximum bei 639 nm.

### Beispiel 2 (Anhydrobase der Formel (II))

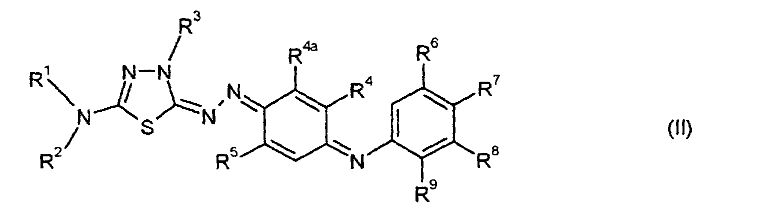

2,6 g des Farbstoffs des Beispiels 1 wurden in 200 ml Methanol gelöst. Es wurden 30 ml 10 Gew.-% Natronlauge zugetropft. Nach 2 Stunden Rühren wurde abgesaugt und mit Methanol gewaschen. Das Produkt wurde in 200 ml Wasser verrührt, abgesaugt, mit Wasser gewaschen und im Vakuum getrocknet. Man erhielt 1,9 g (96 % der Theorie) der Anhydrobase der Formel (II) mit R¹ = R² = Isopropyl, R³ = Methyl, R⁴ = Methoxy, R⁵ = R6 = R⁸ = R⁹ = Wasserstoff und R⁷ = 4-Methoxyanilino.

Eine Lösung in Dimethylformamid zeigte ein Absorptionsmaximum bei 526 nm.

### Beispiel 3 (Herstellen einer Lösung eines Farbstoffs der Formel (I))

0,9 g der Anhydrobase des Beispiels 2 wurden in 6 ml einer Mischung aus Diacetonalkohol/Butanol 92/8 suspendiert. 0,25 g Trifluormethansulfonsäure wurden zugesetzt. 5 min wurde auf 70°C erwärmt und dann wieder abgekühlt. Man erhielt eine klare, tief grünstichig blaue Lösung des Farbstoffs der Formel (I) mit R¹ = R² = Isopropyl, R³ = Methyl, R⁴ = Methoxy, R⁵ = R⁶ = R⁸ = R⁹ = Wasserstoff, R⁷ = 4-Methoxyanilino und X⁻ = F₃CSO₃⁻.

Ein Tropfen dieser Lösung wurde auf eine Glasplatte verstrichen. Nach Verdunsten des Lösungsmittels erhielt man einen transparenten, grünstichig blauen Film, der abriebfest auf dem Glas haftete.

Analog zu Beispiel 1 wurden die in nachfolgender Tabelle aufgeführten Farbstoffe hergestellt:

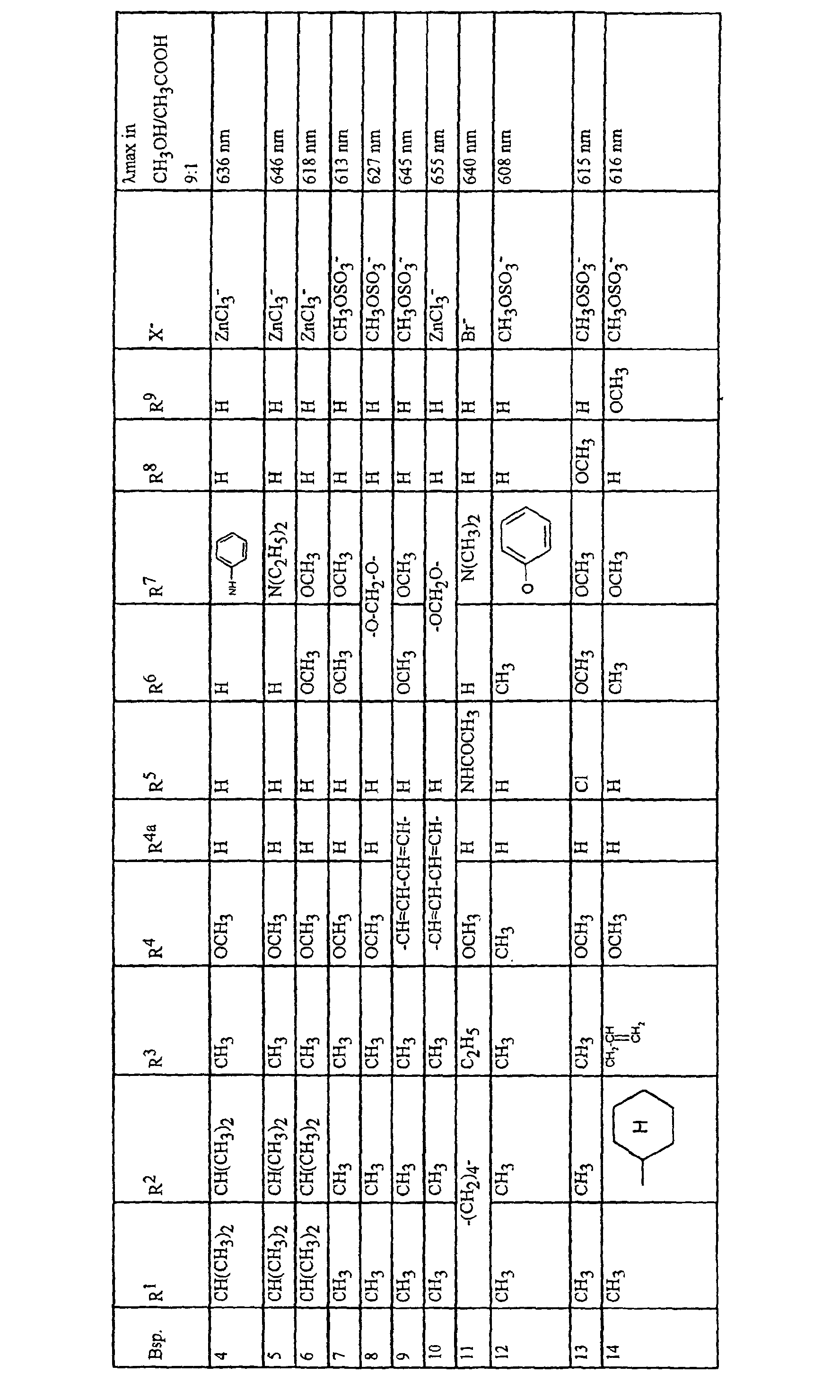

## Patentansprüche

1. Mit Licht beschreibbare Informationsspeicher enthaltend mindestens einen kationischen Thiadiazoldiphenylaminfarbstoff der Formel (I) 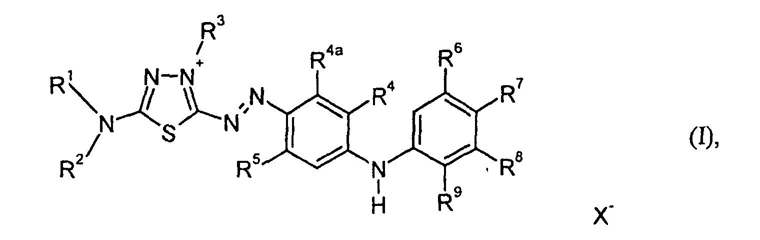 worin
R¹ und R² unabhängig voneinander für Wasserstoff, Alkyl, Alkenyl, Cycloalkyl, Aralkyl oder einen gegebenenfalls über eine Methylenoder Ethylenbrücke gebundenen Heterocyclus stehen,
oder
R¹ und R² gemeinsam mit dem Stickstoffatom, an welches sie gebunden sind, für einen heterocyclischen Ring stehen,
R³ für Alkyl, Alkenyl, Cycloalkyl oder Aralkyl steht,
R⁴ und R⁹ unabhängig voneinander für Wasserstoff, Alkyl, Alkoxy oder Halogen stehen,
R^{4a} für Wasserstoff steht
oder
R⁴ und R^{4a} gemeinsam für eine -CH=CH-CH=CH-Brücke stehen,
R⁵ für Wasserstoff, Alkyl, Alkoxy, Aryloxy, Arylamino, Halogen, Cyano, Alkoxycarbonyl oder Nitro steht,
R⁶ und R⁸ unabhängig voneinander für Alkyl, Alkoxy oder Halogen stehen und R⁸ zusätzlich für Wasserstoff stehen kann,
R⁷ für Alkoxy, Aryloxy oder NR¹⁰R¹¹ steht,
oder
R⁶ und R⁷ gemeinsam eine -OCH₂O-, -CH₂CH₂O-, 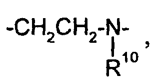 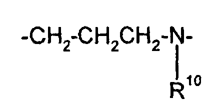 oder 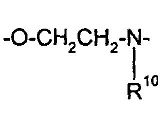 Brücke bilden,
R¹⁰ und R¹¹ unabhängig voneinander für Alkyl, Alkenyl, Cycloalkyl, Aralkyl, Aryl oder den Rest eines Heterocyclus stehen und R¹⁰ zusätzlich für Wasserstoff steht
oder
R¹⁰ und R¹¹ gemeinsam mit dem Stickstoffatom, an welches sie gebunden sind, für einen heterocyclischen Ring stehen,
und wobei, im Falle daß R⁷ für NR¹⁰R¹¹ steht, R⁶ und R⁸ unabhängig voneinander die oben angegebene Bedeutung haben sowie zusätzlich für Wasserstoff stehen und R⁵ die oben angegebene Bedeutung hat, sowie zusätzlich für NHCOR¹² oder NHSO₂R¹³ steht,
R¹² und R¹³ unabhängig voneinander für Alkyl, Alkenyl, Cycloalkyl, Aryl, den Rest eines Heterocyclus, Alkoxy oder NR¹⁰R¹¹ stehen und R¹² - zusätzlich für Wasserstoff steht und
X⁻ für ein Anion steht.

2. Informationsspeicher gemäß Anspruch 1, **dadurch gekennzeichnet, daß** in Formel (I)
R¹ und R² unabhängig voneinander für jeweils gegebenenfalls durch Hydroxy, Halogen, Cyano, C₁-C₄-Alkoxy, Aminocarbonyl und/oder C₁-C₄-Alkoxycarbonyl substituiertes C₁-C₈-Alkyl, Allyl, Cyclopenyl, Cyclohexyl, für einen jeweils gegebenenfalls durch Halogen, Cyano, C₁-C₄-Alkyl und/oder C₁-C₄-Alkoxy substituierten Benzyl- oder Phenethylrest, Tetramethylensulfonylrest, Tetrahydrofurylmethyl-, Pyridylmethyl- oder Pyridylethylrest stehen,
oder
R² für Wasserstoff steht,
oder
R¹ und R² gemeinsam mit dem Stickstoffatom, an welches sie gebunden sind, für einen jeweils gegebenenfalls durch bis zu 4 Methylgruppen substituierten Pyrrolidino-, Piperidino- oder Morpholinorest oder für einen gegebenenfalls am Stickstoff durch Methyl, Ethyl, Hydroxyethyl oder Aminoethyl substituierten Piperazinorest stehen,
R³ für gegebenenfalls durch Hydroxy, Halogen, Cyano, C₁-C₄-Alkoxy, Aminocarbonyl und/oder C₁-C₄-Alkoxycarbonyl substituiertes C₁-C₂₀-Alkyl, für Allyl oder für einen jeweils gegebenenfalls durch Halogen, C₁-C₄-Alkyl und/oder C₁-C₄-Alkoxy substituierten Benzyloder Phenethylrest steht,
R⁴ und R⁹ unabhängig voneinander für Wasserstoff, C₁-C₄-Alkyl, C₁-C₄-Alkoxy oder Halogen stehen,
R^{4a} für Wasserstoff steht
oder
R⁴ und R^{4a} gemeinsam für eine -CH=CH-CH=CH-Brücke stehen,
R⁵ für Wasserstoff, C₁-C₄-Alkyl, C₁-C₄-Alkoxy, C₆-C₁₀-Aryloxy, C₆-C₁₀-Arylamino, Halogen, Cyano, C₁-C₄-Alkoxycarbonyl oder Nitro steht,
R⁶ und R⁸ unabhängig voneinander für C₁-C₄-Alkyl, C₁-C₄-Alkoxy oder Halogen stehen, und R⁸ zusätzlich für Wasserstoff stehen kann,
R⁷ für C₁-C₈-Alkoxy, gegebenenfalls durch Halogen, Cyano, C₁-C₄-Alkyl und/oder C₁-C₄-Alkoxy substituiertes C₆-C₁₀-Aryloxy oder für NR¹⁰R¹¹ steht,
oder
R⁶ und R⁷ gemeinsam eine -OCH₂O-, 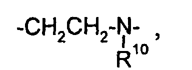 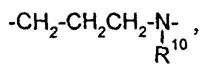 oder 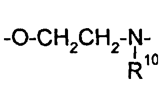 Brücke bilden,
R¹⁰ und R¹¹ unabhängig voneinander für gegebenenfalls durch Hydroxy, Halogen, Cyano oder C₁-C₄-Alkoxy substituiertes C₁-C₈-Alkyl, für Allyl, Cyclopentyl oder Cyclohexyl oder für jeweils gegebenenfalls durch Hydroxy, Halogen, Cyano, C₁-C₈-Alkyl, C₁-C₈-Alkoxy oder NR¹⁰R¹¹ substituiertes C₆-C₁₀-Aryl oder Pyridyl steht
oder
R¹⁰ für Wasserstoff steht,
oder
R¹⁰ und R¹¹ gemeinsam mit dem Stickstoffatom, an welches sie gebunden sind, für einen jeweils gegebenenfalls durch 1 bis 4 Methylgruppen substituierten Pyrrolidino-, Piperidino- oder Morpholinorest oder für einen gegebenenfalls am Stickstoff durch Methyl, Ethyl, Hydroxyethyl oder Aminoethyl substituierten Piperazinorest stehen,
und wobei im Falle, daß R⁷ für NR¹⁰R¹¹ steht, R⁶ und R⁸ unabhängig voneinander die oben angegebene Bedeutung haben oder für Wasserstoff stehen und R⁵ die oben angegebene Bedeutung hat oder für NHCOR¹² oder NHSO₂R¹³ steht,
R¹² und R¹³ unabhängig voneinander für jeweils gegebenenfalls durch Hydroxy, Halogen, Cyano oder C₁-C₄-Alkoxy substituiertes C₁-C₁₂-Alkyl oder C₁-C₈-Alkoxy oder für jeweils gegebenenfalls durch Hydroxy, Halogen, Cyano, C₁-C₄-Alkyl oder C₁-C₄-Alkoxy substituiertes C₆-C₁₀-Aryl, Benzyl oder Pyridyl stehen oder für Allyl, Cyclopentyl, Cyclohexyl oder NR¹⁰R¹¹ stehen
oder
R¹² für Wasserstoff steht und
X⁻ für ein Anion steht.

3. Informationsspeicher gemäß Anspruch 1, **dadurch gekennzeichnet, daß** in Formel (I)
R¹ und R² unabhängig voneinander für Methyl, Ethyl, Propyl, Isopropyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylmethyl, Aminocarbonylethyl, Methoxycarbonylmethyl, Methoxycarbonylethyl, Allyl, Cyclohexyl, Benzyl, Phenethyl, Methylbenzyl, Chlorbenzyl, Methoxybenzyl, Tetramethylensulfon-3-yl, Furfuryl, 2- oder 4-Pyridylmethyl oder 2- oder 4-Pyridylethyl stehen
oder
R² für Wasserstoff steht
oder
R¹ und R² gemeinsam mit dem Stickstoffatom, an welches sie gebunden sind, für Pyrrolidino, Piperidino, Morpholino oder gegebenenfalls am Stickstoff durch Methyl, Ethyl, Hydroxyethyl oder Aminoethyl substituiertes Piperazino stehen,
R³ für Methyl, Ethyl, Propyl, Butyl, Hexyl, Octyl, Dodecyl, Hydroxyethyl, Hydroxypropyl, Chlorethyl, Cyanoethyl, Methoxyethyl, Ethoxyethyl, Methoxypropyl, Methoxycarbonylethyl, Allyl oder Benzyl steht,
R⁴ für Methyl, Ethyl, Methoxy, Ethoxy oder Chlor steht,
R^{4a} für Wasserstoff steht
oder
R⁴ und R^{4a} gemeinsam für eine -CH=CH-CH=CH-Brücke stehen, R⁵ -für Wasserstoff, Methyl, Methoxy, Chlor oder Cyano steht,
R⁶, R⁸ und R⁹ unabhängig voneinander für Methyl, Ethyl, Methoxy oder Ethoxy stehen
oder
R⁸ und R⁹ unabhängig voneinander für Wasserstoff stehen,
R⁷ für Methoxy, Ethoxy, Propoxy, Butoxy, Phenoxy oder NR¹⁰R¹¹ steht,
oder
R⁶ und R⁷ gemeinsam eine -O-CH₂-O-Brücke bilden,
R¹⁰ und R¹¹ unabhängig voneinander für Methyl, Ethyl, Propyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Allyl, Cyclohexyl, Benzyl, Phenyl, Tolyl, Methoxyphenyl, Ethoxyphenyl, Phenoxyphenyl, Chlorphenyl, Dimethoxyphenyl, Trimethoxyphenyl, Dimethylaminophenyl, Diethylaminophenyl, Dibutylaminophenyl, Pyrrolidinophenyl, Piperidinophenyl, Anilinophenyl, N-Methylanilinophenyl oder N,N-Diphenylaminophenyl stehen
oder
R¹⁰ für Wasserstoff steht
oder
R¹⁰ und R¹¹ gemeinsam mit dem Stickstoffatom, an welches sie gebunden sind, für Pyrrolidino, Piperidino, Morpholino oder für gegebenenfalls am Stickstoff-durch Methyl, Ethyl, Hydroxyethyl oder AminoethyL substituiertes Piperazino stehen und
und wobei im Falle, daß R⁷ für NR¹⁰R¹¹ steht, R⁶ und R⁸ die oben angegebene Bedeutung haben oder unabhängig voneinander für Wasserstoff stehen und R⁵ die oben angegebene Bedeutung hat oder für Acetylamino, Propionylamino, Trifluoracetylamino, Methoxycarbonylamino, Methylsulfonylamino oder Perfluorbutylsulfonylamino steht,
X⁻ für ein Anion steht.

4. Informationsspeicher gemäß Anspruch 1, **dadurch gekennzeichnet, daß** in Formel (I)
R¹ und R² unabhängig voneinander für Methyl, Ethyl, Propyl, Isopropyl, Butyl, Hydroxyethyl, Hydroxypropyl, Cyanoethyl oder Methoxyethyl stehen oder R¹ und R² gemeinsam mit dem dazwischenliegenden Stickstoffatom Pyrrolidino, Piperidino oder Morpholino stehen,
R³ für Methyl, Ethyl, Propyl, Butyl, Hexyl oder Benzyl steht,
R⁴ für Methoxy steht,
R^{4a} für Wasserstoff steht,
R⁵ für Wasserstoff, Methyl oder Methoxy steht,
R⁶ für Methyl oder Methoxy steht,
R⁷ für Methoxy, Ethoxy, Phenoxy, Methylamino, Ethylamino, Dimethylamino, Diethylamino, Dibutylamino, Anilino, 2-, 3- oder 4-Methylanilino, 2-, 3- oder 4-Methoxyanilino, 2,4- oder 3,4-Dimethoxyanilino, 4-Dimethylaminoanilino, N-Methylanilino oder 4-Anilinoanilino steht, oder
R⁶ und R⁷ gemeinsam eine -OCH₂O-Brücke bilden,
R⁸ und R⁹ für Wasserstoff stehen und
X⁻ für ein Anion steht.

5. Informationsspeicher gemäß Anspruch 1, **dadurch gekennzeichnet, daß** in Formel (I)
R¹ und R² unabhängig voneinander für Methyl, Ethyl, Propyl, Isopropyl, Butyl, Hydroxyethyl, Hydroxypropyl, Cyanoethyl oder Methoxyethyl stehen
oder
R¹ und R² gemeinsam mit dem Stickstoffatom, an welches sie gebunden sind, für Pyrrolidino, Piperidino oder Morpholino stehen,
R³ für Methyl, Ethyl, Propyl, Butyl, Hexyl oder Benzyl steht,
R⁴ für Methoxy steht,
R^{4a} für Wasserstoff steht,
R⁵ für Wasserstoff, Methyl, Methoxy oder Acetylamino steht,
R⁶ für Wasserstoff, Methyl oder Methoxy steht,
R⁷ für Methylamino, Ethylamino, Dimethylamino, Diethylamino, Dibutylamino, Anilino, 2-, 3- oder 4-Methylanilino, 2-, 3- oder 4-Methoxyanilino, 2,4- oder 3,4-Dimethoxyanilino, 4-Dimethylaminoanilino, N-Methylanilino oder 4-Anilinoanilino steht, oder
R⁶ und R⁷ gemeinsam eine -O-CH₂O-Brücke bilden,
R⁸ und R⁹ für Wasserstoff stehen und
X⁻ für ein Anion steht.

## Claims

1. Light-writable data storage media comprising at least one cationic thiadiazolediphenylamine dye of the formula (I) 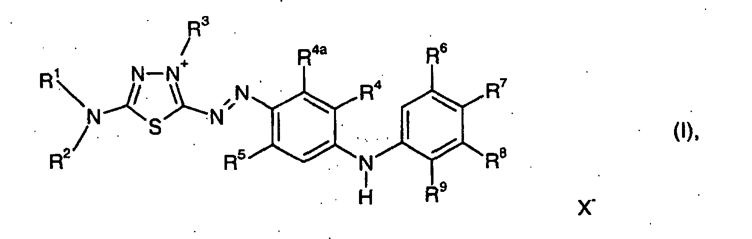 in which
R¹ and R², independently of one another represent hydrogen, alkyl, alkenyl, cycloalkyl, aralkyl or represent a heterocycle which is optionally attached via a methylene or ethylene bridge,
or
R¹ and R², together with the nitrogen atom to which they are attached, represent a heterocyclic ring,
R³ represents alkyl, alkenyl, cycloalkyl or aralkyl,
R⁴ and R⁹ independently of one another represent hydrogen, alkyl, alkoxy or halogen,
R^{4a} represents hydrogen
or
R⁴ and R^{4a} together represent a -CH=CH-CH=CH-bridge,
R⁵ represents hydrogen, alkyl, alkoxy, aryloxy, arylamino, halogen, cyano, alkoxycarbonyl or nitro,
R⁶ and R⁸ independently of one another represent alkyl, alkoxy or halogen and R⁸ can additionally represent hydrogen,
R⁷ represents alkoxy, aryloxy or NR¹⁰R¹¹,
or
R⁶ and R⁷ together form a -OCH₂O-, -CH₂CH₂O-, 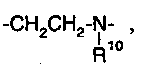 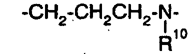 or 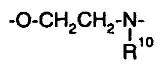 bridge,
R¹⁰ and R¹¹ independently of one another represent alkyl, alkenyl, cycloalkyl, aralkyl, aryl or the radical of a heterocycle and R¹⁰ additionally represents hydrogen
or
R¹⁰ and R¹¹, together with the nitrogen atom to which they are attached, represent a heterocyclic ring,
and where if R⁷ represents NR¹⁰R¹¹ R⁶ and R⁸ independently of one another have the meaning indicated above and additionally represent hydrogen and R⁵ has the meaning given above and additionally represents NHCOR¹² or NHSO₂R¹³,
R¹² and R¹³ independently of one another represent alkyl, alkenyl, cycloalkyl, aryl, the radical of a heterocycle, alkoxy or NR¹⁰R¹¹ and R¹² additionally represents hydrogen, and
X⁻ represents an anion.

2. Data storage medium according to Claim 1, **characterized in that** in formula (I)
R¹ and R² independently of one another represent in each case optionally hydroxyl-, halogen-, cyano- C₁-C₄-alkoxy- aminocarbonyl-and/or C₁-C₄-alkoxycarbonyl-substituted C₁-C₈-alkyl, allyl, cyclopentyl, cyclohexyl, or represent an in each case optionally halogen-, cyano-, C₁-C₄-alkyl- and/or C₁-C₄-alkoxy-substituted benzyl- or phenethyl radical, tetramethylenesulphonyl radical, tetrahydrofurylmethyl, pyridylmethyl or pyridylethyl radical,
or
R² represents hydrogen,
or
R¹ and R², together with the nitrogen atom to which they are attached, represent a pyrrolidino, piperidino or morpholino radical each of which is optionally substituted by up to 4 methyl groups, or represent a piperazino radical which is optionally substituted on the nitrogen by methyl, ethyl, hydroxyethyl or aminoethyl,
R³ represents C₁-C₂₀-alkyl which is optionally substituted by hydroxyl, halogen, cyano, C₁-C₄-alkoxy, aminocarbonyl and/or C₁-C₄-alkoxycarbonyl, or represents allyl or a benzyl or phenethyl radical each of which is optionally substituted by halogen, C₁-C₄-alkyl and/or C₁-C₄-alkoxy,
R⁴ and R⁹ independently of one another represent hydrogen, C₁-C₄-alkyl, C₁-C₄-alkoxy or halogen,
R^{4a} represents hydrogen
or
R⁴ and R^{4a} together represent a -CH=CH-CH=CH-bridge,
R⁵ represents hydrogen, C₁-C₄-alkyl, C₁-C₄-alkoxy, C₆-C₁₀-aryloxy, C₆-C₁₀-arylamino, halogen, cyano, C₁-C₄-alkoxycarbonyl or nitro,
R⁶ and R⁸ independently of one another represent C₁-C₄-alkyl, C₁-C₄-alkoxy or halogen, and R⁸ can additionally represent hydrogen,
R⁷ represents C₁-C₈-alkoxy, C₆-C₁₀-aryloxy which is optionally substituted by halogen, cyano, C₁-C₄-alkyl and/or C₁-C₄-alkoxy, or represents NR¹⁰R¹¹,
or
R⁶ and R⁷ together form a -OCH₂O-, 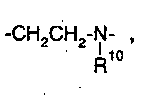 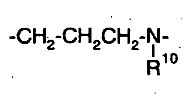 or 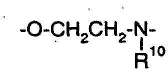 bridge,
R¹⁰ and R¹¹ independently of one another represent C₁-C₈-alkyl which is optionally substituted by hydroxyl, halogen, cyano or C₁-C₄-alkoxy, or represent allyl, cyclopentyl or cyclohexyl or represent C₆-C₁₀-aryl or pyridyl each of which is optionally substituted by hydroxyl, halogen, cyano, C₁-C₈-alkyl, C₁-C₈-alkoxy or NR¹⁰R¹¹
or
R¹⁰ represents hydrogen,
or
R¹⁰ and R¹¹, together with the nitrogen atom to which they are attached, represent a pyrrolidino, piperidino or morpholino radical each of which is optionally substituted by 1 to 4 methyl groups or represent a piperazino radical which is optionally substituted on the nitrogen by methyl, ethyl, hydroxyethyl or aminoethyl,
and where if R⁷ represents NR¹⁰R¹¹ R⁶ and R⁸ independently of one another have the meaning indicated above or represent hydrogen and R⁵ has the meaning given above or represents NHCOR¹² or NHSO₂R¹³,
R¹² and R¹³ independently of one another represent C₁-C₁₂-alkyl or C₁-C₈-alkoxy each of which is optionally substituted by hydroxyl, halogen, cyano or C₁-C₄-alkoxy or represent C₆-C₁₀-aryl, benzyl or pyridyl each of which is optionally substituted by hydroxyl, halogen, cyano, C₁-C₄-alkyl or C₁-C₄-alkoxy or represent allyl, cyclopentyl, cyclohexyl or NR¹⁰R¹¹
or
R¹² represents hydrogen, and
X⁻ represents an anion.

3. Data storage medium according to Claim 1, **characterized in that** in formula (I)
R¹ and R² independently of one another represent methyl, ethyl, propyl, isopropyl, butyl, methylpropyl, pentyl, methylbutyl, dimethylpropyl, hexyl, hydroxyethyl, hydroxypropyl, chloroethyl, cyanomethyl, cyanoethyl, cyanopropyl, methoxyethyl, ethoxyethyl, methoxypropyl, aminocarbonylme-thyl, aminocarbonylethyl, methoxycarbonylmethyl, methoxycarbonylethyl, allyl, cyclohexyl, benzyl, phenethyl, methylbenzyl, chlorobenzyl, methoxybenzyl, tetramethylenesulphon-3-yl, furfuryl, 2- or 4-pyridylmethyl or 2- or 4-pyridylethyl
or
R² represents hydrogen
or
R¹ and R², together with the nitrogen atom to which they are attached, represent pyrrolidino, piperidino, morpholino or represent piperazino which is optionally substituted on the nitrogen by methyl, ethyl, hydroxyethyl or aminoethyl,
R³ represents methyl, ethyl, propyl, butyl, hexyl, octyl, dodecyl, hydroxyethyl, hydroxypropyl, chloroethyl, cyanoethyl, methoxyethyl, ethoxyethyl, methoxypropyl, methoxycarbonylethyl, allyl or benzyl,
R⁴ represents methyl, ethyl, methoxy, ethoxy or chloro,
R^{4a} represents hydrogen
or
R⁴ and R^{4a} together represent a -CH=CH-CH=CH-bridge,
R⁵ represents hydrogen, methyl, methoxy, chloro or cyano,
R⁶, R⁸ and R⁹ independently of one another represent methyl, ethyl, methoxy or ethoxy
or
R⁸ and R⁹ independently of one another represent hydrogen,
R⁷ represents methoxy, ethoxy, propoxy, butoxy, phenoxy or NR¹⁰R¹¹,
or
R⁶ and R⁷ together form a -O-CH₂-O-bridge,
R¹⁰ and R¹¹ independently of one another represent methyl, ethyl, propyl, butyl, methylpropyl, pentyl, methylbutyl, dimethylpropyl, hexyl, hydroxyethyl, hydroxypropyl, chloroethyl, cyanomethyl, cyanoethyl, cyanopropyl, methoxyethyl, ethoxyethyl, methoxypropyl, allyl, cyclohexyl, benzyl, phenyl, tolyl, methoxyphenyl, ethoxyphenyl, phenoxyphenyl, chlorophenyl, dimethoxyphenyl, trimethoxyphenyl, dimethylaminophenyl, diethylaminophenyl, dibutylamino-phenyl, pyrrolidinophenyl, piperidinophenyl, anilinophenyl, N-methylanilinophenyl or N,N-diphenylaminophenyl
or
R¹⁰ represents hydrogen
or
R¹⁰ and R¹¹, together with the nitrogen atom to which they are attached, represent pyrrolidino, piperidino, morpholino or represent piperazino which is optionally substituted on the nitrogen by methyl, ethyl, hydroxyethyl or aminoethyl
and where if R⁷ represents NR¹⁰R¹¹ R⁶ and R⁸ have the meaning indicated above or independently of one another represent hydrogen and R⁵ has the meaning indicated above or represents acetylamino, propionylamino, trifluoroacetyl amino, methoxycarbonylamino, methylsulphonylamino or perfluorobutylsulphonylamino,
X⁻ represents an anion.

4. Data storage medium according to Claim 1, **characterized in that** in formula (I)
R¹ and R² independently of one another represent methyl, ethyl, propyl, isopropyl, butyl, hydroxyethyl, hydroxypropyl, cyanoethyl or methoxyethyl or R¹ and R², together with the nitrogen atom lying between them, represent pyrrolidino, piperidino or morpholino,
R³ represents methyl, ethyl, propyl, butyl, hexyl or benzyl,
R⁴ represents methoxy,
R^{4a} represents hydrogen,
R⁵ represents hydrogen, methyl or methoxy,
R⁶ represents methyl or methoxy,
R⁷ represents methoxy, ethoxy, phenoxy, methylamino, ethylamino, dimethylamino, diethylamino, dibutylamino, anilino, 2-, 3- or 4-methylanilino, 2-, 3- or 4-methoxyanilino, 2,4- or 3,4-dimethoxyanilino, 4-dimethylaminoanilino, N-methylanilino or 4-anilinoanilino,
or
R⁶ and R⁷ together form a -OCH₂O-bridge,
R⁸ and R⁹ represent hydrogen, and
X⁻ represents an anion.

5. Data storage medium according to Claim 1, **characterized in that** in formula (I)
R¹ and R² independently of one another represent methyl, ethyl, propyl, isopropyl, butyl, hydroxyethyl, hydroxypropyl, cyanoethyl or methoxyethyl
or
R¹ and R², together with the nitrogen atom to which they are attached, represent pyrrolidino, piperidino or morpholino,
R³ represents methyl, ethyl, propyl, butyl, hexyl or benzyl,
R⁴ represents methoxy,
R^{4a} represents hydrogen,
R⁵ represents hydrogen, methyl, methoxy or acetylamino,
R⁶ represents hydrogen, methyl or methoxy,
R⁷ represents methylamino, ethylamino, dimethylamino, diethylamino, dibutylamino, anilino, 2- 3- or 4-methylanilino, 2- 3- or 4-methoxyanilino, 2,4- or 3,4-dimethoxyanilino, 4-dimethylaminoanilino, N-methylanilino or 4-anilinoanilino,
or
R⁶ and R⁷ together form a -O-CH₂O-bridge,
R⁸ and R⁹ represent hydrogen, and
X⁻ represents an anion.

## Revendications

1. Mémoires photo-inscriptibles contenant au moins un colorant cationique de thiadiazolediphénylamine de formule (I) 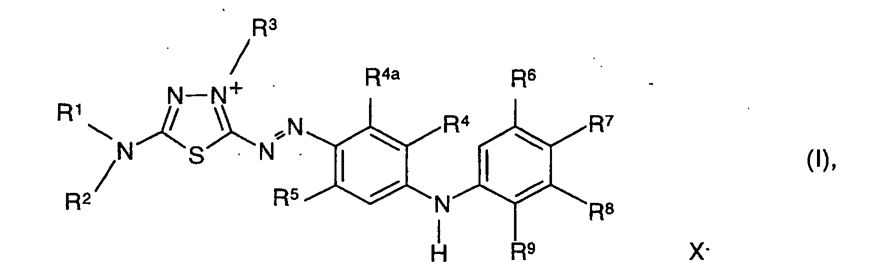 dans laquelle
R¹ et R² représentent chacun, indépendamment l'un de l'autre, l'hydrogène, un groupe alkyle, alcényle, cycloalkyle, aralkyle ou un hétérocycle éventuellement relié par l'intermédiaire d'un pont méthylène ou éthylène,
ou bien
R¹ et R² forment ensemble et avec l'atome d'azote auquel ils sont reliés un noyau hétérocyclique,
R³ représente un groupe alkyle, alcényle, cycloalkyle ou aralkyle,
R⁴ et R⁹ représentent chacun, indépendamment l'un de l'autre, l'hydrogène, un groupe alkyle, alcoxy ou un halogène,
R^{4a} représente l'hydrogène
ou bien
R⁴ et R^{4a} forment ensemble un pont -CH=CH-CH=CH-,
R⁵ représente l'hydrogène, un groupe alkyle, alcoxy, aryloxy, arylamino, un halogène, un groupe cyano, alcoxycarbonyle ou nitro,
R⁶ et R⁸ représentent chacun, indépendamment l'un de l'autre, un groupe alkyle, alcoxy ou un halogène, R⁸ pouvant également représenter l'hydrogène,
R⁷ représente un groupe alcoxy, aryloxy ou NR¹⁰R¹¹,
ou bien
R⁶ et R⁷ forment ensemble un pont -OCH₂O-, -CH₂CH₂O-, 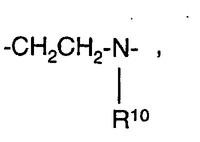 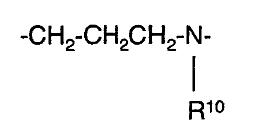 ou 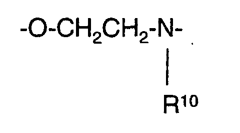
R¹⁰ et R¹¹ représentent chacun, indépendamment l'un de l'autre, un groupe alkyle, alcényle, cycloalkyle, aralkyle, aryle ou le radical d'un hétérocycle, R¹⁰ pouvant en outre représenter l'hydrogène,
ou bien
R¹⁰ et R¹¹ forment ensemble et avec l'atome d'azote auquel ils sont reliés un noyau hétérocyclique,
étant en outre précisé que lorsque R⁷ représente NR¹⁰R¹¹, R⁶ et R⁸ ont chacun, indépendamment l'un de l'autre, les significations indiquées ci-dessus mais peuvent en outre représenter l'hydrogène, et R⁵ a les significations indiquées ci-dessus mais peut en outre représenter NHCOR¹² ou NHSO₂R¹³,
R¹² et R¹³ représentent chacun, indépendamment l'un de l'autre, un groupe alkyle, alcényle, cycloalkyle, aryle, le radical d'un hétérocyclique, un groupe alcoxy ou NR¹⁰R¹¹, R¹² pouvant en outre représenter l'hydrogène et
X⁻ représente un anion.

2. Mémoires selon la revendication 1, **caractérisées en ce que**, dans la formule (I)
R¹ et R² représentent chacun, indépendamment l'un de l'autre, un groupe alkyle en C₁ à C₈, allyle, cyclopentyle, cyclohexyle portant éventuellement des substituants hydroxy, halogéno, cyano, alcoxy en C₁ à C₄, aminocarbonyle et/ou (alcoxy en C₁ à C₄) carbonyle, un groupe benzyle ou phénéthyle portant éventuellement des substituants halogéno, cyano, alkyle en C₁ à C₄ et/ou alcoxy en C₁ à C₄, un groupe tétraméthylène-sufonyle, tétrahydrofurylméthyle, pyridylméthyle ou pyridyléthyle,
ou bien
R² représente l'hydrogène,
ou bien
R¹ et R² forment ensemble et avec l'atome d'azote auquel ils sont reliés, un radical pyrrolidino, pipéridino ou morpholino portant le cas échéant jusqu'à 4 substituants méthyle, ou un radical pipérazino portant éventuellement sur l'azote des substituants méthyle, éthyle, hydroxyéthyle ou aminoéthyle,
R³ représente un groupe alkyle en C₁ à C₂₀ portant éventuellement des substituants hydroxy, halogéno, cyano, alcoxy en C₁ à C₄, aminocarbonyle et/ou (alcoxy en C₁ à C₄)carbonyle, un groupe allyle ou un groupe benzyle ou phénéthyle portant éventuellement des substituants halogéno, alkyle en Ci à C₄ et/ou alcoxy en C₁ à C₄,
R⁴ et R⁹ représentent chacun, indépendamment l'un de l'autre, l'hydrogène, un groupe alkyle en C₁ à C₄, alcoxy en C₁ à C₄ ou un halogène,
R^{4a} représente l'hydrogène,
ou bien
R⁴ et R^{4a} représentent ensemble un pont -CH=CH-CH=CH-,
R⁵ représente l'hydrogène, un groupe alkyle en C₁ à C₄, alcoxy en C₁ à C₄, aryloxy en C₆ à C₁₀, arylamino en C₆ à C₁₀, un halogène, un groupe cyano, (alcoxy en C₁ à C₄)carbonyle ou nitro,
R⁶ et R⁸ représentent chacun, indépendamment l'un de l'autre, un groupe alkyle en C₁ à C₄, alcoxy en C₁ à C₄ ou un halogène, et R⁸ peut en outre représenter l'hydrogène,
R⁷ représente un groupe alcoxy en C₁ à C₈, un groupe aryloxy en C₆ à C₁₀ portant éventuellement des substituants halogéno, cyano, alkyle en C₁ à C₄ et/ou alcoxy en C₁ à C₄, ou un groupe NR¹⁰R¹¹,
ou bien
R⁶ et R⁷ forment ensemble un pont -OCH₂O-, 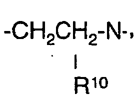 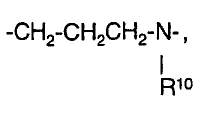
R¹⁰ et R¹¹ représentent chacun, indépendamment l'un de l'autre, un groupe alkyle en C₁ à C₈ portant éventuellement des
ou 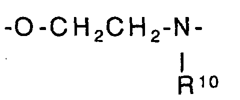 substituants hydroxy, halogéno, cyano ou alcoxy en C₁ à C₄, un groupe allyle, cyclopentyle ou cyclohexyle, ou encore un groupe aryle en C₆ à C₁₀ ou pyridyle qui porte éventuellement des substituants hydroxy, halogéno, cyano, alkyle en C₁ à C₈, alcoxy en C₁ à C₈ ou NR¹⁰R¹¹,
ou bien
R¹⁰ représente l'hydrogène,
ou bien
R¹⁰ et R¹¹ forment ensemble et avec l'atome d'azote auquel ils sont reliés, un radical pyrrolidino, pipéridino ou morpholino portant éventuellement 1 à 4 substituants méthyle, ou bien un radical pipérazino portant éventuellement sur l'azote des substituants méthyle, éthyle, hydroxyéthyle ou aminoéthyle,
étant précisé en outre que lorsque R⁷ représente NR¹⁰R¹¹, R⁶ et R⁸ ont chacun, indépendamment l'un de l'autre, les significations indiquées ci-dessus mais peuvent encore représenter l'hydrogène et R⁵ a les significations indiquées ci-dessus ou représente NHCOR¹² ou NHSO₂R¹³,
R¹² et R¹³ représentent chacun, indépendamment l'un de l'autre, un groupe alkyle en C₁ à C₁₂ ou alcoxy en C₁ à C₈ portant éventuellement des substituants hydroxy, halogéno, cyano ou alcoxy en C₁ à C₄, ou bien un groupe aryle en C₆ à C₁₀, benzyle ou pyridyle portant éventuellement des substituants hydroxy, halogéno, cyano, alkyle en C₁ à C₄ ou alcoxy en C₁ à C₄, ou bien un groupe allyle, cyclopentyle, cyclohexyle ou NR¹⁰R¹¹,
ou bien
R¹² représente l'hydrogène et
X⁻ représente un anion.

3. Mémoires selon la revendication 1, **caractérisées en ce que**, dans la formule (I)
R¹ et R² représentent chacun, indépendamment l'un de l'autre, un groupe méthyle, éthyle, propyle, isopropyle, butyle, méthylpropyle, pentyle, méthylbutyle, diméthylpropyle, hexyle, hydroxyéthyle, hydroxypropyle, chloréthyle, cyanométhyle, cyanoéthyle, cyanopropyle, méthoxyéthyle, éthoxyéthyle, méthoxypropyle, aminocarbonylméthyle, aminocarbonyléthyle, méthoxycarbonylméthyle, méthoxycarbonyléthyle, allyle, cyclohexyle, benzyle, phénéthyle, méthylbenzyle, chlorobenzyle, méthoxybenzyle, tétraméthylènesulfon-3-yle, furfuryle, 2- ou 4-pyridylméthyle ou 2- ou 4-pyridyléthyle
ou bien
R² représente l'hydrogène,
ou bien
R¹ et R² forment ensemble et avec l'atome d'azote auquel ils sont reliés, un groupe pyrrolidino, pipéridino, morpholino ou bien un groupe pipérazino portant éventuellement sur l'azote des substituants méthyle, éthyle, hydroxyéthyle ou aminoéthyle,
R³ représente un groupe méthyle, éthyle, propyle, butyle, hexyle, octyle, dodécyle, hydroxyéthyle, hydroxypropyle, chloréthyle, cyanoéthyle, méthoxyéthyle, éthoxyéthyle, méthoxypropyle, méthoxycarbonyléthyle, allyle ou benzyle
R⁴ représente un groupe méthyle, éthyle, méthoxy, éthoxy ou le chlore,
R^{4a} représente l'hydrogène
ou bien
R⁴ et R^{4a} forment ensemble un pont -CH=CH-CH=CH-,
R⁵ représente l'hydrogène, un groupe méthyle, méthoxy, le chlore ou un groupe cyano,
R⁶, R⁸ et R⁹ représentent chacun, indépendamment les uns des autres, un groupe méthyle, éthyle méthoxy ou éthoxy,
ou bien
R⁸ et R⁹ représentent chacun, indépendamment l'un de l'autre, l'hydrogène,
R⁷ représente un groupe méthoxy, éthoxy, propoxy, butoxy, phénoxy ou NR¹⁰R¹¹,
ou bien
R⁶ et R⁷ forment ensemble un pont -O-CH₂-O-,
R¹⁰ et R¹¹ représentent chacun, indépendamment l'un de l'autre, un groupe méthyle, éthyle, propyle, butyle, méthylpropyle, pentyle, méthylbutyle, diméthylpropyle, hexyle, hydroxyéthyle, hydroxypropyle, chloréthyle, cyanométhyle, cyanoéthyle, cyanopropyle, méthoxéthyle, éthoxyéthyle, méthoxypropyle, allyle, cyclohexyle, benzyle, phényle, tolyle, méthoxyphényle, éthoxyphényle, phénoxyphényle, chlorophényle, diméthoxyphényle, triméthoxyphényle, dimétylaminophényle, diéthylaminophényle, dibutylaminophényle, pyrrolidinophényle, pipéridinophényle, anilinophényle, N-méthylanilinophényle ou N,N-diphénylaminophényle,
ou bien
R¹⁰ représente l'hydrogène,
ou bien
R¹⁰ et R¹¹ forment ensemble et avec l'atome d'azote auquel ils sont reliés, un groupe pyrrolidino, pipéridino, morpholino, ou bien un groupe pipérazino portant éventuellement sur l'azote des substituants méthyle, éthyle, hydroxyéthyle ou aminoéthyle,
étant précisé en outre que lorsque R⁷ représente NR¹⁰R¹¹, R⁶ et R⁸ ont les significations indiquées ci-dessus mais peuvent en outre représenter, indépendamment l'un de l'autre, l'hydrogène, et R⁵ a les significations indiquées ci-dessus ou représente un groupe acétylamino, propionylamino, trifluoracétylamino, méthoxycarbonylamino, méthylsulfonylamino ou perfluorobutylsulfonylamino,
X⁻ représente un anion.

4. Mémoires selon la revendication 1, **caractérisées en ce que**, dans la formule (I)
R¹ et R² représentent chacun, indépendamment l'un de l'autre, un groupe méthyle, éthyle, propyle, isopropyle, butyle, hydroxyéthyle, hydroxypropyle, cyanoéthyle ou méthoxyéthyle ou bien R¹ et R² forment ensemble et avec l'atome d'azote situé entre eux un groupe pyrrolidino, pipéridino ou morpholino,
R³ représente un groupe méthyle, éthyle, propyle, butyle, hexyle ou benzyle,
R⁴ représente un groupe méthoxy,
R^{4a} représente l'hydrogène,
R⁵ représente l'hydrogène, un groupe méthyle ou méthoxy,
R⁶ représente un groupe méthyle ou méthoxy,
R⁷ représente un groupe méthoxy, éthoxy, phénoxy, méthylamino, éthylamino, diméthylamino, diéthylamino, dibutylamino, anilino, 2-, 3- ou 4-méthylanilino, 2-, 3- ou 4-méthoxyanilino, 2,4- ou 3,4-diméthoxyanilino, 4-diméthylaminoanilino, N-méthylanilino ou 4-anilinoanilino, ou bien
R⁶ et R⁷ forment ensemble un pont -OCH₂O-,
R⁸ et R⁹ représentent l'hydrogène et
X⁻ représente un anion.

5. Mémoires selon la revendication 1, **caractérisées en ce que** dans la formule (I)
R¹ et R² représentent chacun, indépendamment l'un de l'autre, un groupe méthyle, éthyle, propyle, isopropyle, butyle, hydroxyéthyle, hydroxypropyle, cyanoéthyle ou méthoxyéthyle,
ou bien
R¹ et R² forment ensemble et avec l'atome d'azote auquel ils sont reliés, un groupe pyrrolidino, pipéridino ou morpholino,
R³ représente un groupe méthyle, éthyle, propyle, butyle, hexyle ou benzyle,
R⁴ représente un groupe méthoxy,
R^{4a} représente l'hydrogène,
R⁵ représente l'hydrogène, un groupe méthyle, méthoxy ou acétylamino,
R⁶ représente l'hydrogène, un groupe méthyle ou méthoxy,
R⁷ représente un groupe méthylamino, éthylamino, diméthylamino, diéthylamino, dibutylamino, anilino, 2-, 3- ou 4-méthylanilino, 2-, 3- ou 4-méthoxyanilino, 2,4- ou 3,4-diméthoxyanilino, 4-diméthylaminoanilino, N-méthylanilino ou 4-anilinoanilino, ou bien
R⁶ et R⁷ forment ensemble un pont -O-CH₂O-,
R⁸ et R⁹ représentent l'hydrogène et
X⁻ représente un anion.
